# EUROPEAN PATENT APPLICATION

(11) **EP 2 343 704 A2**
(43) Date of publication of application: **13.07.2011**
(21) Application number: 11000024.7
(22) Date of filing: 04.01.2011
(51) Int. Cl.: G11B 7/085, G11B 21/02, G11B 21/12

(54) **Apparatus and method for controlling layer jump in optical disc drive**

(30) Priority: 05.01.2010 KR 20100000298
(71) Applicant: Hitachi-LG Data Storage Korea, Inc., Geumcheon-gu Seoul 153-803 (KR)
(72) Inventor: Baek, Jongshik, Seoul 153-803 (KR)
(74) Representative: Katérle, Axel

(57) **Abstract**

A method for controlling layer jump in an optical disc drive is provided. In one embodiment of the present invention, upon request of layer jump, a circumferential position of a rotating disc can be compared with a predetermined circumferential position stored in a memory based on a signal generated at a spindle motor and layer jump operation can be performed at the predetermined circumferential position. The predetermined circumferential position can correspond to a position where displacement of a disc in up and down direction while the disc makes one rotation becomes largest and/or smallest. The predetermined circumferential position can be detected when an optical disc inserted is recognized to have two or more recording layers based on a driving signal applied to a focusing actuator at an outer circumference of the disc while a focusing servo is turned on.

## Description

### BACKGROUND

### Field

This document relates to an apparatus and a method for controlling layer jump reliably in a multi-layer optical disc.

### Related Art

Optical discs such as CD, DVD, and BD have come into wide use. Now a dual layer disc which has two recording layers and a multi-layer disc which has three or more recording layers are emerging.

In an optical disc where multiple recording layers are formed, to record data in each recording layer or to read out data from the corresponding recording layer, a focusing servomechanism which focuses a laser beam on a target recording layer in a rotating optical disc should be operated properly; to move to another recording layer form a current recording layer, layer jump operation of focusing a laser beam from the current recording layer to the corresponding recording layer should be carried out.

In an optical pick-up which records or reads out data to and from an optical disc, a beam coming from a laser diode passes through an object lens and focuses toward the disc; a beam reflected from the disc is sensed by a photo detector, from which a focusing error signal, tracking error signal, and RF signal can be obtained. As the focusing error signal is used to actuate a focusing actuator supporting the object lens, performed is the focusing servomechanism through which the laser beam is focused on a recording layer of a rotating disc with shaking motion; meanwhile, the focusing error signal generated around the recording layer is used to actuate a focusing actuator, thereby accomplishing layer jump operation.

A disc usually shakes up and down/left and right while rotating; shaking up and down is called surface vibration while shaking left and right, eccentricity. If the disc suffers surface vibration, the recording layer rises above and falls below a reference height; therefore, performing layer jump reliably becomes difficult, eventually making the layer jump liable to error and delayed.

### DISCLOSURE

### Technical Problem

An aspect of this document is to provide a method of performing layer jump operation reliably.

### Technical Solution

A method for controlling layer jump according to one embodiment of the present invention comprises carrying out layer jump operation at a predetermined circumferential position in a rotating disc.

In one embodiment, the predetermined circumferential position can be detected based on a signal generated from a motor rotating the disc.

In one embodiment, the predetermined circumferential position can correspond to a position where displacement of a disc in up and down direction while the disc makes one rotation becomes largest and/or smallest.

In one embodiment, the method can further comprise detecting the predetermined circumferential position and storing the detected position in a memory; and upon request of layer jump, comparing a current circumferential position of a rotating disc with the predetermined circumferential position stored in the memory.

In one embodiment, the predetermined circumferential position can be detected based on a driving signal applied to a focusing actuator at an outer circumference of a disc while a focusing servo is turned on.

In one embodiment, the predetermined circumferential position can be detected when an optical disc drive recognizes that an optical disc inserted therein has two or more recording layers.

In one embodiment, when a laser beam focused on a current layer passes the predetermined circumferential position or a position ahead of the predetermined circumferential position by a predetermined distance, a kick pulse and a break pulse to move an object lens up or down can be applied sequentially.

In one embodiment, level and width of each of the kick pulse and the break pulse and an interval between the two pulses are determined beforehand based on a distance between jumping layers.

In one embodiment, the distance between the layers can be calculated based on disc information of the optical disc or an interval of an S-curve which is generated as an optical disc drive swings an object lens to recognize an optical disc.

An optical disc drive according to another embodiment of the present invention records data in an optical disc or reproduce data from the optical disc, comprising an optical pick-up comprising an actuator for moving an object lens up and down; a spindle motor for rotating an optical disc; a driving unit for driving the actuator and the spindle motor; a memory for storing data; a controller configured to compare a circumferential position of a rotating disc with a predetermined circumferential position stored in the memory based on a signal generated at the spindle motor upon request of layer jump and control and control the driving unit to perform layer jump operation at the predetermined circumferential position.

### Advantageous Effects

Therefore, layer jump can be performed reliably even for an unbalanced disc or a disc with large surface vibration.

### BRIEF DESCRIPTION OF THE DRAWINGS

The implementation of this document will be described in detail with reference to the following drawings in which like numerals refer to like elements.

FIG. 1 illustrates a focus servomechanism for a dual layer disc;

FIG. 2 illustrates a focus drive signal and an error signal for a dual layer disc;

FIG. 3 illustrates an example where a disc having a vibration component shakes up and down while rotating;

FIGS. 4 and 5 illustrate a focusing drive signal for layer jump of a surface vibration disc;

FIG. 6 illustrates an embodiment of detecting FG addresses of a spindle motor at a time point where change of disc displacement in an up and down direction is smallest according to the present invention;

FIG. 7 illustrates a structure of an optical disc drive to which the present invention is applied; and

FIGS. 8 and 9 illustrate an embodiment where layer jump operation is performed at a time point where change of disc displacement in an up and down direction is smallest according to the present invention.

### DETAILED DESCRIPTION

Hereinafter, an implementation of this document will be described in detail with reference to the attached drawings.

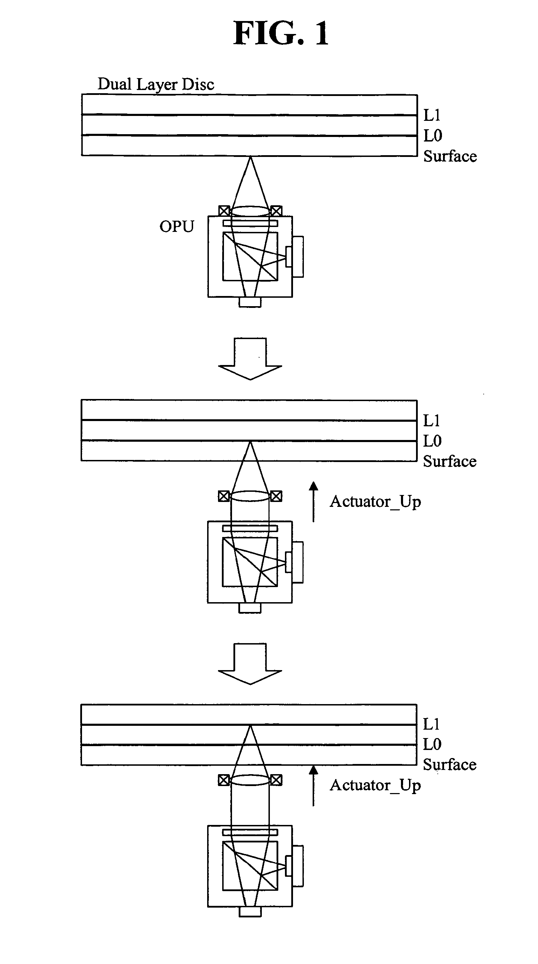

An optical pick-up (OPU) for recording and reproducing data to and from an optical disc in an optical disc drive, as shown in FIG. 1, comprises a focusing actuator for performing focusing servo and layer jump operation by moving an object lens in a vertical direction.

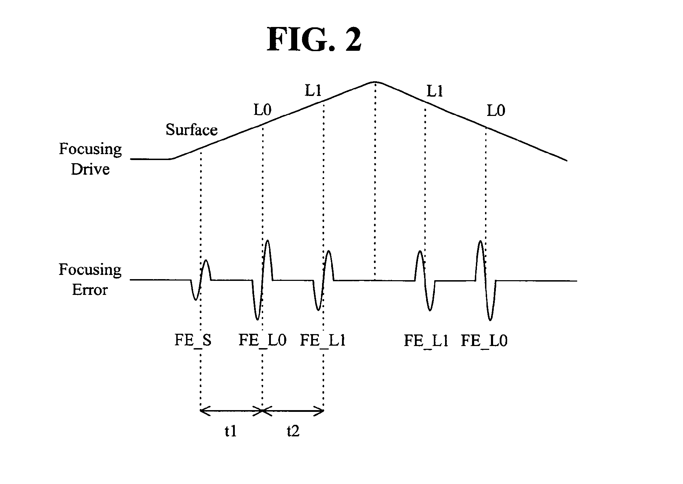

As shown in FIG. 2, if the object lens is elevated in a vertical direction by gradually increasing a focusing drive signal which drives the focusing actuator, focusing error signals FE_S, FE L0, FE_L1 in the shape of an S-curve are detected sequentially with a predetermined time interval t1, t2 near the surface, a first layer L0, and a second layer L1 of a dual layer disc.

The optical disc drive, to perform jump operation from the first layer L0 to the second layer L1, applies the focusing drive signal in a direction along which the focusing actuator is elevated; to perform jump operation from the second layer L1 to the first layer L0, in a direction along which the focusing actuator descends.

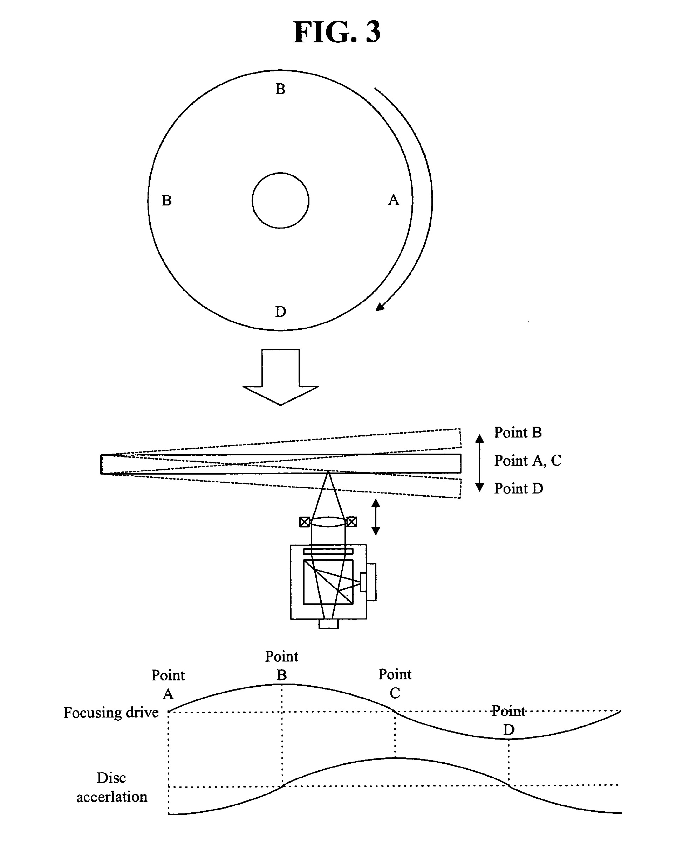

As shown in FIG. 3, if an optical disc having a surface vibration or an unbalance component starts to rotate due to the rotation of a spindle motor, the optical disc shakes heavily up and down in the outer circumference area thereof. When A and C point of the disc pass the optical pick-up, the outer circumference is placed almost at the same height with the inner circumference of the disc; when B point passes the optical pick-up, the outer circumference of the disc ascends higher than the inner circumference thereof; when D point passes the optical pick-up, the outer circumference of the disc descends lower than the inner circumference thereof.

If a rotating disc shakes up and down as shown in FIG. 3 while the focusing servo is activated, the focusing drive signal driving the focusing actuator is applied to the focusing actuator with the same phase as the displacement of the disc recording layer in an up and down direction. The acceleration of the disc in an up and down direction becomes zero at B and D point where displacement of the disc is largest, while the absolute value of the acceleration thereof becomes largest at A and C point.

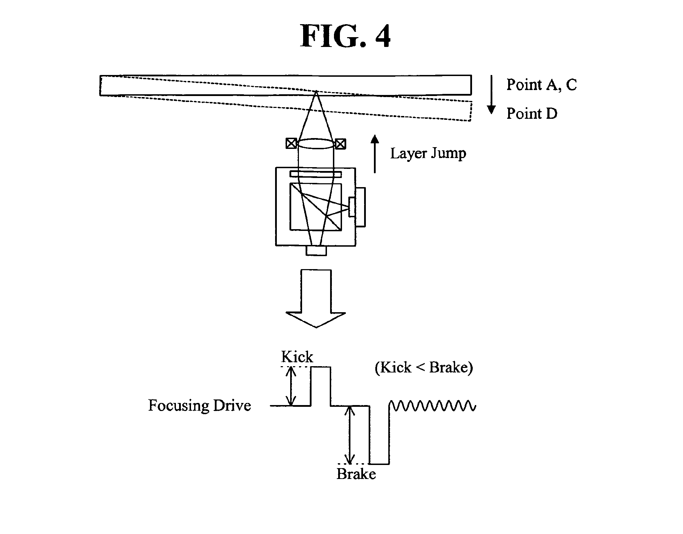

As shown in FIG. 4, the outer circumference of the disc is parallel to the inner circumference thereof when C point of the disc passes the optical pick-up, whereas the outer circumference of the disc descends when D point passes the optical pick-up. If layer up operation is performed in the opposite direction of displacement of the outer circumference of the disc at the time of the C point passing the optical pick-up and the D point moving toward the optical pick-up, to perform layer jump operation properly, in the focusing drive signal applied to the focusing actuator, magnitude (or amplitude) of a kick pulse to elevate the focusing actuator should be made smaller than that of a break pulse to stop the rising focusing actuator (kick < brake).

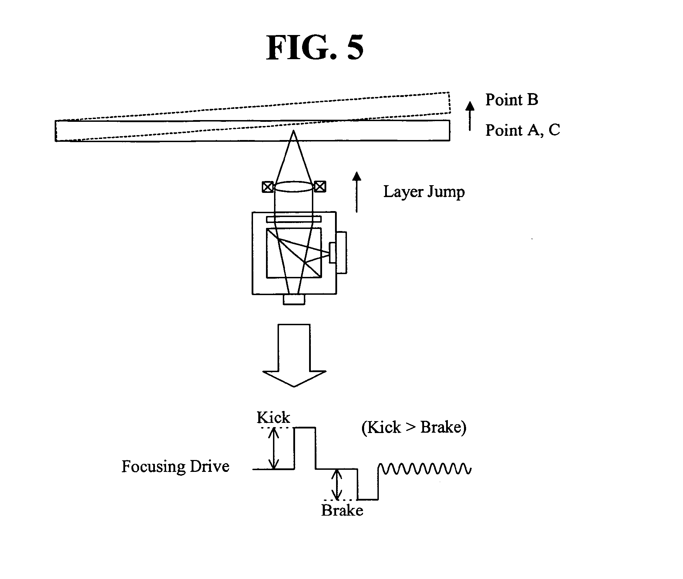

As shown in FIG. 5, the outer circumference of the disc is parallel to the inner circumference thereof when A point of the disc passes the optical pick-up, whereas the outer circumference of the disc ascends when B point passes the optical pick-up. If layer up operation is performed in the same direction of displacement of the outer circumference of the disc at the time of the A point passing the optical pick-up and the B point moving toward the optical pick-up, to perform layer jump operation properly, in the focusing drive signal applied to the focusing actuator, magnitude (or amplitude) of a kick pulse to elevate the focusing actuator should be made larger than that of a break pulse to stop the rising focusing actuator (kick > brake).

In other words, if layer jump is to be performed when the acceleration of the disc in an up and down direction is large, the kick and the break pulse of the focusing drive signal for layer jump should be adjusted precisely; due to this reason, layer jump can be liable to error.

Therefore, the present invention, by performing layer jump at the time or at the position of zero or small acceleration in an up and down direction of the disc, in other words, by performing layer jump at a predetermined circumferential position of the disc, allows reliable layer jump without adjusting the kick and the break pulses of the focusing drive signal for layer jump separately depending on situations.

To this end, by checking a displacement pattern in an up and down direction of the disc according to the rotation thereof, searched for is a position where the acceleration in an up and down direction of the disc is zero or small. If layer jump is requested, the focusing drive signal for layer jump can be applied at the position found.

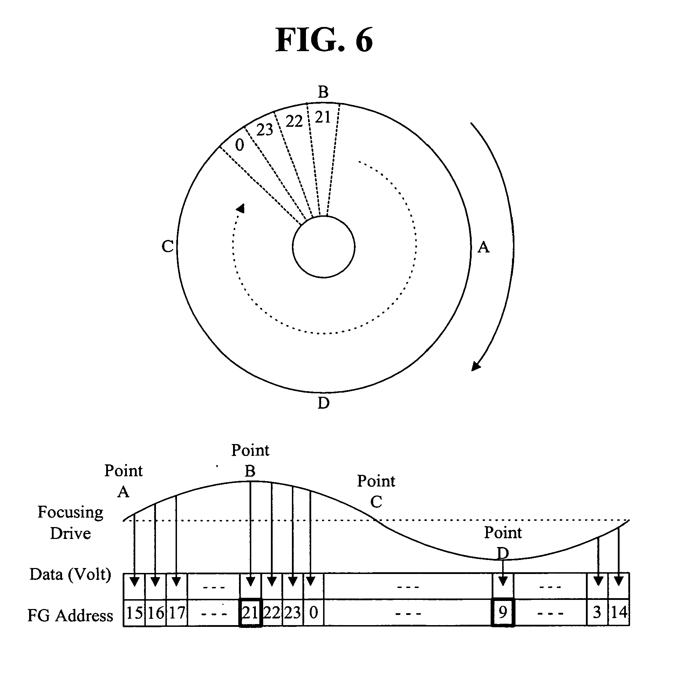

FIG. 6 illustrates an embodiment of detecting FG address of a spindle motor at a time point where change of disc displacement in an up and down direction is smallest according to the present invention.

A spindle motor which rotates a disc generates a frequency generating (FG) signal (or FG address); when the disc makes one rotation, for example, 24 FG addresses (FG address = 0-23) are generated, therefore, a circumferential position of the disc can be checked through the FG address.

After the optical pick-up is moved to the outer circumference of the optical disc where displacement in an up and down direction is large and the focusing servo is turned on, the magnitude (for example, voltage value) of the focusing drive signal applied to the focusing actuator for focusing servo as the disc rotates is measured; by referring to the FG address output from the spindle motor, searched for is the FG address at the time point when the change of displacement in an up and down direction of the disc is smallest (or at the time point when the acceleration in an up and down direction of the disc is zero or small)---that is, the FG address when the magnitude of the focusing drive signal is largest and smallest---the FG address found can be stored in the memory.

With reference to FIG. 6, the magnitude of the focusing drive signal applied to the focusing actuator is largest in the ascending direction at point B and the magnitude of the focusing drive signal is largest in the descending direction at point D; the former corresponds to FG address 21 while the latter FG address 9.

Next, if a layer jump request is issued during data recording in the optical disc or playback operation, the kick pulse and the break pulse for layer jump can be applied sequentially to the focusing actuator at the time point (or with a little time difference before or after the time point) when an FG address from among FG addresses output from the spindle motor while the focusing servo is maintained corresponds to the FG address found from the memory.

The present invention can be applied to a playback- only drive which only reproduces the data of an optical disc or various types of optical disc drives (ODDs) which can record data in an optical disc.

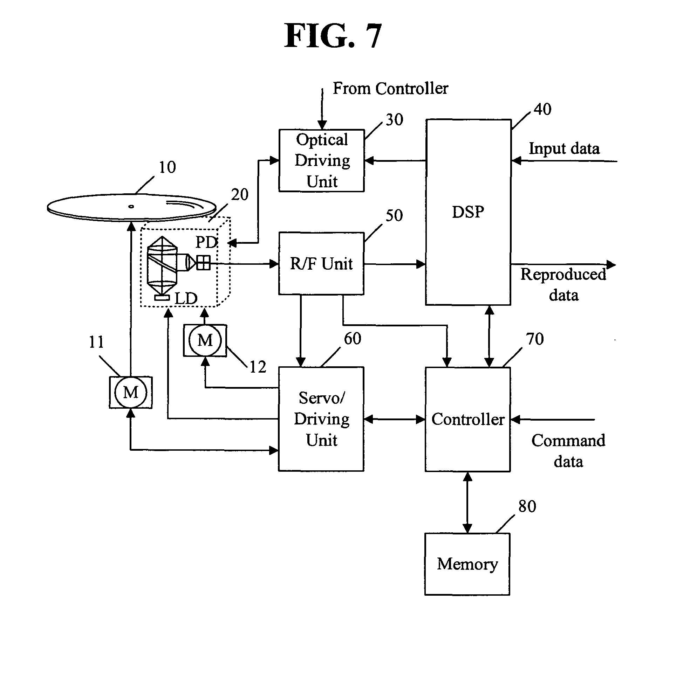

FIG. 7 illustrates one embodiment of a structure of an optical disc drive to which the present invention is applied.

In general, an optical disc drive comprises a spindle motor 11; a sled motor 12; an optical pick-up 20 recording and reading out data to and from an optical disc by using a laser beam; a recording/playback unit driving the spindle motor 11, the sled motor 12, and the optical pick-up 20 and processing a servo signal and recording/playback data; and a controller 70 controlling the recording/playback unit. The recording/playback unit may comprise an optical driving unit 30, a digital signal processor (DSP) 40, an R/F unit 50, and a servo/driving unit60, where the optical driving unit 30 can be included in the optical pick-up 20.

The DSP 40 converts input digital data into a recording format by adding an error correction code (ECC); an optical driving unit 30 outputs a light quantity driving signal according to an input signal; the optical pick-up 20 records data to an optical disc 10 or reads data from a recording surface of the optical disc 10 according to the light quantity driving signal.

The R/F unit 50 outputs the signal detected at the optical pick-up 20 as a binary signal by filtering and shaping the detected signal; and also generates and outputs a tracking error signal TE, a focusing error signal FE, an RF signal, and so on. The DSP 40, by using a built-in clock synchronized with the binary signal, restores the binary signal to the original data. The servo/driving unit 60 generates a servo signal required for focusing servo, tracking servo, sled servo, and spindle servo based on the signal from the R/F unit 50; drives the spindle motor 11 which rotates the optical disc 10; drives the sled motor 12 which moves the optical pick-up 20 toward the inner and outer circumference of the optical disc 10; and drives a current required for focusing servo and tracking servo of an object lens within the optical pick-up 20.

The controller 70 records or reads out data to and from an optical disc by controlling individual elements; to read out data from the optical disc 10 by controlling the optical driving unit 30, drives a laser diode within the optical pick-up 20 by using playback power; and to record data to the optical disc 10, drives the laser diode by recording power.

In addition, the controller 70, based on an RF signal detected at the optical pick-up 20 and output from the R/F unit 50; and an FG signal generated from the spindle motor 11, controls the servo/driving unit 60 and drives the spindle motor 11, thereby rotating the optical disc 10 with a speed required, moves the optical pick-up 20 to a required position by driving the sled motor 12, and performs focusing servo and tracking servo by applying a current to an actuator supporting the object lens within the optical pick-up 20.

If a multi-layer disc having two or more recording layers is inserted in an optical disc drive, the controller 70 rotates the optical disc by using the spindle motor 11 by controlling the servo/driving unit 60 and at the same time, moves the optical pick-up 20 by using the sled motor 12 to a predetermined outer circumferential area of the optical disc; at this time, FG addresses which the spindle motor 11 generates while rotating the disc are input.

The controller 70 turns on the focusing servo by controlling the servo/driving unit 60 and detects the magnitude of a focusing drive signal applied to a focusing actuator while an optical disc makes one rotation; the controller 70 temporarily stores the voltage value of the focusing drive signal corresponding to each of the 24 FG addresses as the data value for each FG address; the controller 70 detects an FG address corresponding to the time point at which the voltage value of the largest focusing drive signal is applied and/or the voltage value of the smallest focusing drive signal is applied and stores the detected FG addresses in the memory 80. Such operation can be carried out every time a multi-layer disc is inserted in the optical disc drive or power is supplied to the optical disc drive or the optical disc drive is reset. In other words, the above operation can be carried out when the optical disc drive recognizes or determines an inserted optical disc; more specifically, the above operation is carried out when it is determined that the optical disc comprises two or more recording layers.

The controller 70, if layer jump operation is requested during recording operation or playback operation about a multi-layer disc, turns off the focusing servo at the time point (or with a little time difference before or after the time point) when an FG address identical to the FG address stored in the memory 80 is counted while maintaining the focusing servo and carries out layer jump operation.

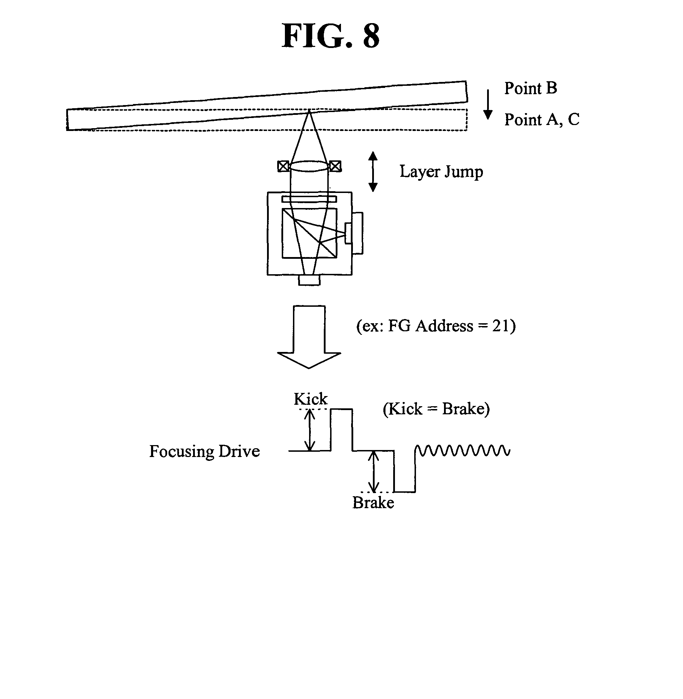

As shown in FIG. 8, if the FG address becomes 21 corresponding to B point by counting the FG address of the spindle motor 11 in real-time, the controller 70 controls the servo/driving unit 60; generates the kick pulse and the break pulse of the focusing drive signal for layer jump sequentially; and applies the generated pulses to the focusing actuator, where the kick pulse and the break pulse can have the same amplitude or magnitude.

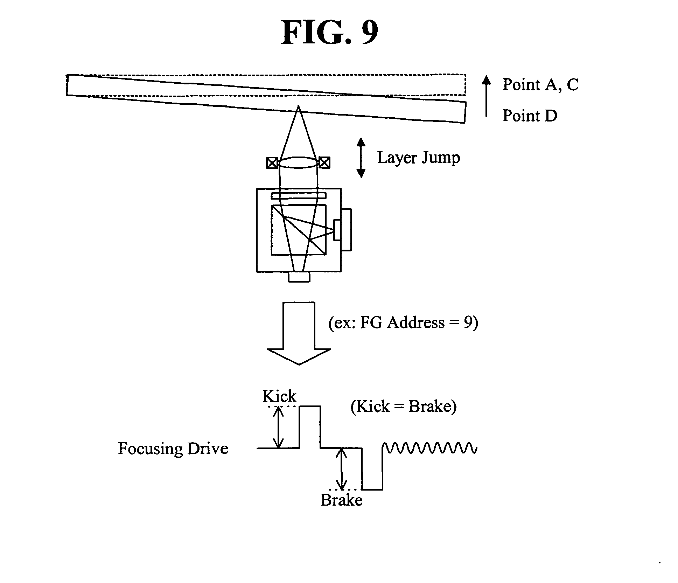

Also, as shown in FIG. 9, if the FG address becomes 9 corresponding to D point by counting the FG address of the spindle motor 11 in real-time, the controller 70 controls the servo/driving unit 60; generates the kick pulse and the break pulse of the focusing drive signal for layer jump sequentially; and applies the generated pulses to the focusing actuator.

Magnitudes (levels) and widths of the kick pulse and the break pulses of the focusing drive signal for layer jump; and an interval between the two pulses can be stored in the memory 80 after being determined previously according to the type of the multi-layer disc; those values can be determined by disc type, number of layers, and the interval between the layers. For the case of a disc comprising three or more recording layers, each level and width of the kick pulse and the break pulse; and the interval between the two pulses can be stored in the memory 80 after being calculated previously according to the distance and direction (layer up or layer down) between layers where layer jump is to be performed.

In addition, to determine a disc type or recognize a disc, the interval between layers can be measured based on a time interval of an S-curve which is detected by swinging the focusing actuator up and down; magnitudes (levels) and widths of the kick pulse and the break pulse and the interval between the two pulses can be determined by the measured interval between the layers. Alternatively, the interval between layers can be calculated from the number of layers and the disc type which can be obtained from disc information recorded in a disc. Furthermore, the level and the width do not have to be the same for the kick pulse and the break pulse.

The exemplary embodiments of the present invention described above have been introduced for illustrative purposes only. It should be understood that those skilled in the art would be able to improve, modify, substitute, or add various other embodiments within the technical principles and scope of the present invention as defined by the following appended claims.

## Claims

1. A method for controlling layer jump, comprising carrying out layer jump operation at a predetermined circumferential position in a rotating disc.

2. The method of claim 1, wherein the predetermined circumferential position corresponds to a position where displacement of a disc in up and down direction while the disc makes one rotation becomes largest and/or smallest.

3. The method of claim 1, wherein the predetermined circumferential position is detected based on a signal generated from a motor rotating the disc.

4. The method of claim 2, further comprising:
detecting the predetermined circumferential position and storing the detected position in a memory; and
upon request of layer jump, comparing a current circumferential position of a rotating disc with the predetermined circumferential position stored in the memory.

5. The method of claim 4, wherein the detecting detects the predetermined circumferential position based on a driving signal applied to a focusing actuator at an outer circumference of a disc while a focusing servo is turned on.

6. The method of claim 4, wherein the detecting detects the predetermined circumferential position when an optical disc drive recognizes that an optical disc inserted therein has two or more recording layers.

7. The method of claim 1, wherein a kick pulse and a break pulse to move an object lens up or down are applied sequentially when a laser beam focused on a current layer passes the predetermined circumferential position or a position ahead of the predetermined circumferential position by a predetermined distance.

8. The method of claim 8, wherein level and width of each of the kick pulse and the break pulse and an interval between the two pulses are determined beforehand based on a distance between jumping layers.

9. The method of claim 8, wherein the distance between the layers is calculated based on disc information of the optical disc or an interval of an S-curve which is generated as an optical disc drive swings an object lens to recognize an optical disc or.

10. An optical disc drive recording data in an optical disc or reproducing data from the optical disc, comprising:
an optical pick-up comprising an actuator for moving an object lens up and down;
a spindle motor for rotating an optical disc;
a driving unit for driving the actuator and the spindle motor;
a memory for storing data; and
a controller configured to compare a circumferential position of a rotating disc with a predetermined circumferential position stored in the memory based on a signal generated at the spindle motor upon request of layer jump and control the driving unit to perform layer jump operation at the predetermined circumferential position.

11. The optical disc drive of claim 10, wherein the predetermined circumferential position corresponds to a position where displacement of a disc in up and down direction while the disc makes one rotation becomes largest and/or smallest.

12. The optical disc drive of claim 11, wherein the controller is configured to detect the predetermined circumferential position and store the detected position in the memory when an optical disc inserted is recognized to have two or more recording layers.

13. The optical disc drive of claim 11, wherein the controller is configured to detect the predetermined circumferential position at an outer circumference of a disc based on a driving signal applied to the actuator while a focusing servo is turned on.

14. The optical disc drive of claim 10, wherein the controller, by controlling the driving unit, is configured to apply a kick pulse and a break pulse to the actuator when a laser beam focused on a current layer passes the predetermined circumferential position or a position ahead of the predetermined circumferential position by a predetermined distance.

15. The optical disc drive of claim 14, wherein the controller is configured to determine level and width of each of the kick pulse and the break pulse and an interval between the two pulses beforehand based on a distance between jumping layers and stores the determined values in the memory.
